# EUROPEAN PATENT APPLICATION

(11) **EP 4 831 084 A1**
(43) Date of publication of application: **28.10.2026**
(21) Application number: 24907270.3
(22) Date of filing: 11.12.2024
(51) Int. Cl.: B65D 88/12, B65D 88/22, B65G 57/00

(54) **LOADED-ARTICLE-CONTAINING CONTAINER AND METHOD FOR MANUFACTURING SAME**

(30) Priority: 22.12.2023 JP 2023216621
(71) Applicant: Sumitomo Seika Chemicals Co., Ltd., Kako-gun, Hyogo 675-0145 (JP)
(72) Inventor: HASHI, Keiko, Himeji-shi, Hyogo 672-8076 (JP); YUMIOKA, Daigo, Himeji-shi, Hyogo 672-8076 (JP)
(74) Representative: Mewburn Ellis LLP
(86) International application number: PCT/JP2024/043763
(87) International publication number: WO 2025/134885

(57) **Abstract**

A cargo-loaded container includes a container, a plurality of flexible containers, and one or more cushioning materials. The plurality of flexible containers each include a main body and a content contained in the main body. The main body includes a bottom portion and a side portion continuous with the bottom portion. The plurality of flexible containers form at least a first row and a second row arranged in parallel. The one or more cushioning materials are disposed between the first row and the second row. When an area of a shape obtained by projecting the main bodies of all the flexible containers constituting the first row onto a virtual plane parallel to a pair of side wall portions of the container is x1, and a total area in which the one or more cushioning materials overlap the shape on the virtual plane is y1, 5 ≤ (y1/x1) × 100 ≤ 80 is satisfied.

## Description

### TECHNICAL FIELD

The present disclosure relates to a cargo-loaded container and a manufacturing method for the same.

### BACKGROUND ART

Patent Literature 1 discloses a transportation system for bagged products. In this transportation system, basket carts with casters for accommodating existing flexible containers (also referred to as "container bags") are used. The basket cart is configured to enable the performance of article-filling and article-unloading operations on the flexible container while accommodating the flexible container. According to Patent Literature 1, storage of a flexible container filled with articles, manual movement, transportation by truck, and removal of the articles are consistently carried out in a state integrated with the basket cart. This reduces the workload on workers moving the flexible container and allows a large quantity of articles to be packed into the flexible container.

### CITATION LIST

### PATENT LITERATURE

Patent Literature 1: JP H6-087513 A

### SUMMARY OF THE INVENTION

### TECHNICAL PROBLEMS

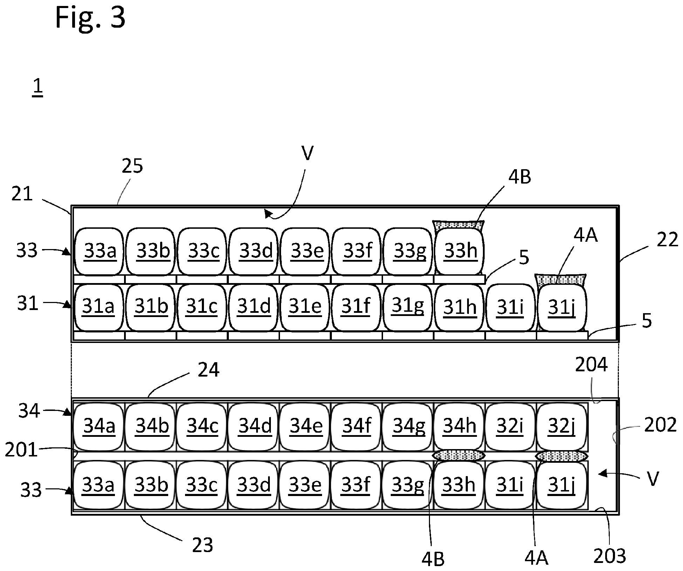

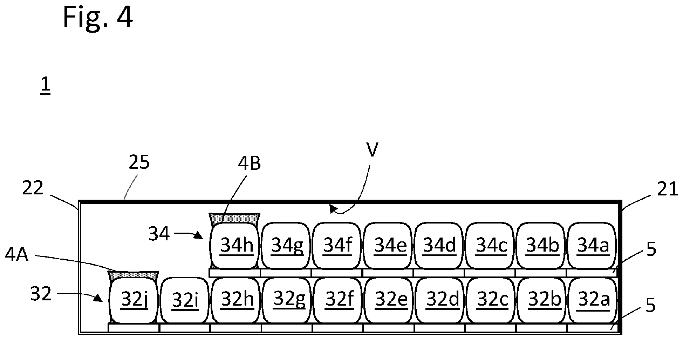

According to Patent Literature 1, the dimensions of the above-described basket carts and the number of basket carts loaded are preset in accordance with a truck bed or the like on which the flexible containers are loaded. This enables a predetermined number of flexible containers to be loaded together with the basket carts into a container on a cargo bed or the like in an extremely orderly manner (Figs. 3 and 4). In practice, however, the number of flexible containers to be loaded into the container does not always reach the predetermined number. In such cases, measures are required to be taken to restrict the movement of each basket cart within the container during transportation. There is a possibility that such measures will require new equipment and/or will instead increase the workload on the workers.

Accordingly, instead of using a basket cart as in Patent Literature 1, it is conceivable to restrict the movement of a flexible container within a container by filling a space within the container with cushioning material. However, it is undesirable to try to fill the space within the container with cushioning material as much as possible because this would require much cushioning material and may lead to a decrease in work efficiency and waste of resources.

An object of the present disclosure is to provide a cargo-loaded container and a manufacturing method for the same that can restrict the movement of flexible containers while limiting the amount of cushioning material used.

### SOLUTIONS TO THE PROBLEMS

A cargo-loaded container according to a first aspect of the present disclosure includes a container, a plurality of flexible containers arranged in the container, and one or more cushioning materials. The container includes a rectangular bottom wall portion, a first wall portion, a second wall portion, and a pair of side wall portions. The rectangular bottom wall portion has mutually facing first and second sides and mutually facing third and fourth sides. The first wall portion rises from the first side. The second wall portion rises from the second side. The pair of side wall portions rises from the third side and the fourth side. The plurality of flexible containers each include a main body and a content contained in the main body. The main body includes a bottom portion and a side portion continuous with the bottom portion. The plurality of flexible containers form at least a first row and a second row arranged in parallel in which the flexible container closest to the first wall portion is a leading flexible container and the flexible container closest to the second wall portion is a trailing flexible container. The one or more cushioning materials are disposed between the first row and the second row. The one or more cushioning materials are disposed so as to be in contact with at least a trailing flexible container of the first row and a trailing flexible container of the second row. When an area of a shape obtained by projecting the main bodies of all the flexible containers constituting the first row onto a virtual plane parallel to the pair of side wall portions is x1, and a total area in which the one or more cushioning materials overlap the shape on the virtual plane is y1, 5 ≤ (y1/x1) × 100 ≤ 80 is satisfied.

A cargo-loaded container according to a second aspect of the present disclosure is the cargo-loaded container according to the first aspect, wherein the plurality of flexible containers further form a third row and a fourth row arranged in parallel in which the flexible container closest to the first wall portion is a leading flexible container and the flexible container closest to the second wall portion is a trailing flexible container, the third row is formed on the first row, and the fourth row is formed on the second row. The cargo-loaded container according to the second aspect further includes one or more cushioning materials disposed between the third row and the fourth row. The one or more cushioning materials disposed between the third row and the fourth row are disposed so as to be in contact with at least a trailing flexible container of the third row and a trailing flexible container of the fourth row. When an area of a shape obtained by projecting the main bodies of all the flexible containers constituting the third row onto the virtual plane is x2, and a total area in which the one or more cushioning materials disposed between the third row and the fourth row overlap the shape on the virtual plane is y2, 5 ≤ (y2/x2) × 100 ≤ 80 is satisfied.

A cargo-loaded container according to a third aspect of the present disclosure is the cargo-loaded container according to the first aspect or the second aspect, wherein the trailing flexible container of the third row is disposed closer to the first wall portion than the trailing flexible container of the first row, and the trailing flexible container of the fourth row is disposed closer to the first wall portion than the trailing flexible container of the second row.

A cargo-loaded container according to a fourth aspect of the present disclosure is the cargo-loaded container according to any one of the first aspect to the third aspect, wherein the one or more cushioning materials disposed between the third row and the fourth row include one or more cushioning materials disposed between the first row and the second row and between the third row and the fourth row so as to be in contact with at least four flexible containers constituting each of the first row to the fourth row.

A cargo-loaded container according to a fifth aspect of the present disclosure is the cargo-loaded container according to any one of the first aspect to the fourth aspect, wherein the container further includes a top portion opposite the bottom wall portion. The cargo-loaded container according to the fifth aspect further includes one or more cushioning materials disposed between the top portion and the trailing flexible containers of the third row and the fourth row.

A manufacturing method for a cargo-loaded container according to a sixth aspect of the present disclosure includes: preparing a container that includes a rectangular bottom wall portion, a first wall portion, a second wall portion, and a pair of side wall portions, the rectangular bottom wall portion having mutually facing first and second sides and mutually facing third and fourth sides, the first wall portion rising from the first side, the second wall portion rising from the second side, the pair of side wall portions rising from the third side and the fourth side; preparing a plurality of flexible containers each including a main body and a content contained in the main body, the main body including a bottom portion and a side portion continuous with the bottom portion; preparing one or more cushioning materials; arranging the plurality of flexible containers on the bottom wall portion and forming at least a first row and a second row arranged in parallel in which the flexible container closest to the first wall portion is a leading flexible container and the flexible container closest to the second wall portion is a trailing flexible container; and disposing the one or more cushioning materials between the first row and the second row. The disposing of the one or more cushioning materials includes: disposing the one or more cushioning materials so as to be in contact with at least a trailing flexible container of the first row and a trailing flexible container of the second row; and disposing the one or more cushioning materials such that when an area of a shape obtained by projecting the main bodies of all the flexible containers constituting the first row onto a virtual plane parallel to the pair of side wall portions is x1, and a total area in which the one or more cushioning materials overlap the shape on the virtual plane is y1, 5 ≤ (y1/x1) × 100 ≤ 80 is satisfied.

### ADVANTAGEOUS EFFECTS OF THE INVENTION

According to the present disclosure, there are provided the cargo-loaded container and the manufacturing method for the same that can restrict the movement of the flexible containers while limiting the amount of cushioning material used.

### BRIEF DESCRIPTION OF THE DRAWINGS

Fig. 1 is a perspective view illustrating an overall configuration of a loaded container according to one embodiment.
Fig. 2 is a perspective view illustrating an exemplary configuration of a flexible container.
Fig. 3 is a perspective view of the loaded container of Fig. 1 from the side and the top.
Fig. 4 is a perspective view of the loaded container of Fig. 1 from another side.
Fig. 5 is a plan view illustrating an exemplary configuration of a cushioning material.
Fig. 6 is a diagram illustrating a method for calculating an area in which the cushioning materials overlap the flexible containers.
Fig. 7 is a diagram illustrating a method for calculating an area in which the cushioning materials overlap the flexible containers.
Fig. 8 is a flowchart illustrating a flow of a manufacturing method for a loaded container according to one embodiment.
Fig. 9 is a diagram illustrating a configuration of a loaded container according to a modification.
Fig. 10 is a diagram illustrating a configuration of a loaded container according to another modification.
Fig. 11 is a diagram illustrating a configuration of a loaded container according to an example.

### DESCRIPTION OF EMBODIMENTS

The following describes a cargo-loaded container and a manufacturing method for a cargo-loaded container according to one embodiment of the present disclosure with reference to the drawings.

### <1. Overall Configuration>

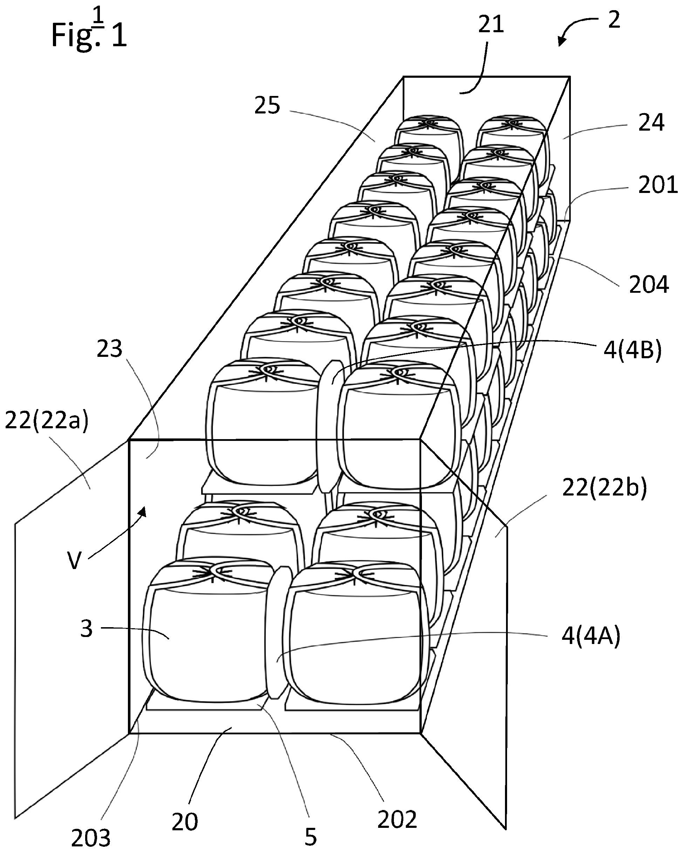

Fig. 1 is a perspective view illustrating an overall configuration of a cargo-loaded container 1 (hereinafter also referred to as a "loaded container 1"). As illustrated in Fig. 1, the loaded container 1 includes a container 2, a plurality of flexible containers 3 each containing a content (hereinafter also referred to as "FIBCs 3"), and cushioning materials 4. Accordingly, the loaded container 1 is configured to transport the plurality of FIBCs 3. The transportation method for the loaded container 1 is not particularly limited, and can be, for example, land transportation by vehicle or rail, sea transportation by ship, or air transportation by aircraft. As described below, the loaded container 1 of the present disclosure can restrict the movement of the FIBC 3 during transportation while limiting the amount of the cushioning materials 4 used even when a space remains within the container 2.

### <2. Container>

The container 2 is a robust container configured to enable loading and transportation of the plurality of FIBCs 3. The container 2 according to this embodiment has a substantially rectangular parallelepiped external shape, and includes a bottom wall portion 20, a first wall portion 21, a second wall portion 22, a pair of side wall portions 23 and 24, and a top portion 25 opposite the bottom wall portion 20. These portions 20 to 25 define a substantially rectangular parallelepiped interior space V. The bottom wall portion 20 is rectangular, and has a first side 201 and a second side 202 facing each other, and a third side 203 and a fourth side 204 facing each other. In this embodiment, the first side 201 and the second side 202 are short sides, and the third side 203 and the fourth side 204 are long sides. The top portion 25 also has the same shape as the bottom wall portion 20. Hereinafter, the directions along the first side 201 and the second side 202 are referred to as the "width direction" of the container 2. The directions along the third side 203 and the fourth side 204 are referred to as the "depth direction" of the container 2. The first side 201 side (first wall portion 21 side) is a rear side, and the second side 202 side (second wall portion 22 side) is a front side.

The first wall portion 21 extends upward from the first side 201. The first wall portion 21 is immovably fixed at its lower end to the bottom wall portion 20 and at its upper end to the top portion 25. That is, in this embodiment, the rear side of the interior space V is always closed by the first wall portion 21.

The pair of side wall portions 23 and 24 extend upward from the third side 203 and the fourth side 204, respectively. The pair of side wall portions 23 and 24 are each continuous with the top portion 25 at their respective upper ends. In this embodiment, the pair of side wall portions 23 and 24 are immovably fixed at their respective lower ends to the bottom wall portion 20 and at their respective upper ends to the top portion 25. Front side end portions of the bottom wall portion 20, the pair of side wall portions 23 and 24, and the top portion 25 define a loading exit of the container 2.

The second wall portion 22 has a first door 22a that is rotatably connected to the front side end portion of the side wall portion 23 and a second door 22b that is rotatably connected to the front side end portion of the side wall portion 24. The first door 22a and the second door 22b function as an opening and closing mechanism that opens and closes the loading exit of the container 2 by rotating relative to the side wall portion 23 and the side wall portion 24, respectively. Fig. 1 illustrates a state in which the first door 22a and the second door 22b open the loading exit. The first door 22a and the second door 22b are closed toward each other at the center of the loading exit to close the loading exit, and form the second wall portion 22 rising from the second side 202.

### <3. Flexible Container>

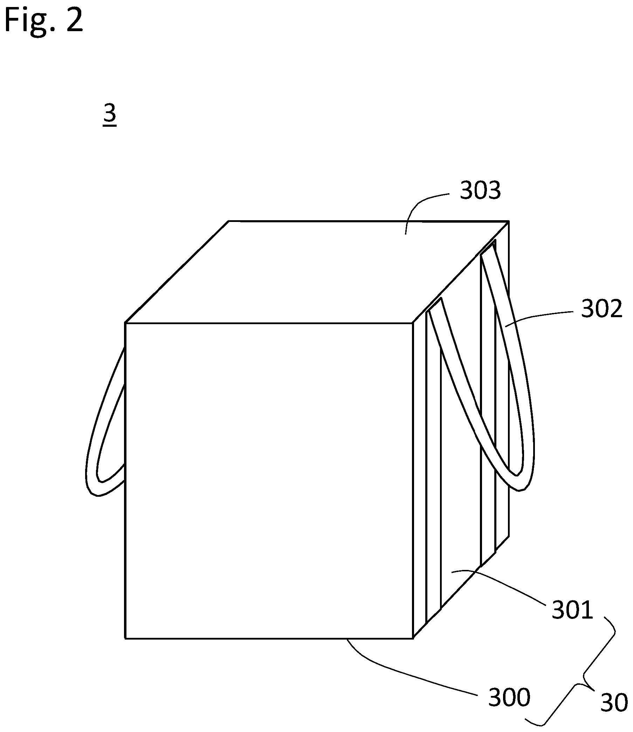

Fig. 2 is a perspective view illustrating one example of the FIBC 3. The FIBC 3 is a foldable bag-shaped container, and is constituted of synthetic resin, natural fibers, paper, or the like. The FIBC 3 has a main body 30 configured to contain a content. The main body 30 has a bottom portion 300 and a side portion 301 that is continuous with the bottom portion 300. In this embodiment, the planar shape of the bottom portion 300 is square, but may be circular. The bottom portion 300 may be provided with a discharge port for discharging the content. The side portion 301 is configured to rise from the periphery of the bottom portion 300, and when the content is contained in the main body 30, form a substantially rectangular external shape in side view.

The FIBC 3 may further include a suspension belt 302 attached to the main body 30 and/or an upper panel 303 configured to at least partially cover the content from above. The FIBC 3 may also have a bag-shaped inner bag that is housed in the main body 30 and in which the content is directly contained. The content contained in the FIBC 3 is not particularly limited, and may include, for example, synthetic resin, grain, vegetables, earth and sand, stone, fertilizer, and industrial chemicals. In this embodiment, the above-described content is particles of a water-absorbent resin.

Fig. 3 is a perspective view of the loaded container 1 of Fig. 1 from the top and the side of the side wall portion 23, and Fig. 4 is a perspective view of the loaded container 1 from the side of the side wall portion 24. As illustrated in Figs. 3 and 4, the plurality of FIBCs 3 containing the contents are arranged from the rear side of the container 2 toward the front side, and form an FIBC row extending in the depth direction in the loaded container 1. The FIBC row includes a first row 31 and a second row 32 that are arranged in parallel on the bottom wall portion 20, as well as a third row 33 formed on the first row 31 and a fourth row 34 formed on the second row 32. The third row 33 and the fourth row 34 are arranged in parallel. A trailing FIBC 33h of the third row is disposed closer to the first wall portion 21 (on the rear side) than a trailing FIBC 31j of the first row, and a trailing FIBC 34h of the fourth row is disposed closer to the first wall portion 21 (on the rear side) than a trailing FIBC 32j of the second row.

Here, two or more FIBC rows "arranged in parallel" mean that the frontmost FIBC 3 (for example, 31j) constituting a given FIBC row (for example, the first row 31) and the frontmost FIBC 3 (for example, 32j) constituting an FIBC row (for example, the second row 32) disposed next to the given FIBC row are arranged so as to be adjacent to each other in the width direction of the container 2. In this embodiment, each FIBC row is constituted of the same number of FIBCs 3, and the FIBCs 3 in the same order counted from a leading FIBC 3 of each FIBC row are arranged in a completely adjacent state in the width direction of the container 2 (in a state in which when viewed through from the side of the side wall portion 23 (or the side wall portion 24), the second row 32 (or the first row 31) disposed on the opposite side of the first row 31 (or the second row 32) is not visible). However, so long as the above-described condition of "arranged in parallel" is satisfied, two or more FIBC rows need not necessarily be constituted of the same number of FIBCs 3 as each other. For example, they may include the FIBCs 3 of different sizes.

All the FIBC rows constituting the loaded container 1 of the present disclosure may be arranged such that in the depth direction of the loaded container 1, the maximum gap between two adjacent FIBCs 3 is no greater than 10 cm, 5 cm, 3 cm, or 1 cm.

The first row 31 and the second row 32 are each constituted of ten FIBCs 3, and the third row 33 and the fourth row 34 are each constituted of eight FIBCs 3. In the present specification, the respective FIBCs 3 constituting the first row 31 to the fourth row 34 may be referred to as 31a to 31j, 32a to 32j, 33a to 33h, and 34a to 34h, respectively to be distinguished. The FIBCs 31a, 32a, 33a, and 34a are leading (rearmost) FIBCs closest to the first wall portion 21, and the FIBCs 31j, 32j, 33h, and 34h are trailing (frontmost) FIBCs closest to the second wall portion 22 in their respective rows.

The FIBCs 3 of this embodiment constitute the first row 31 to the fourth row 34 in a state in which they are each placed on a pallet 5 having a top surface the same as or slightly wider than the bottom portion 300. The pallets 5 in each row are arranged within the interior space V so as to leave as little gap as possible in the depth direction and so as not to overlap one another. The pallets 5 on which the FIBCs 31a, 32a, 33a, and 34a are placed are each arranged either in contact with the first wall portion 21 or with a gap of about 1 cm to 2 cm from the first wall portion 21. Similarly, the pallets 5 on which the FIBCs 31a to 31j and 33a to 33h are placed are each arranged either in contact with the side wall portion 23 or with a gap of about 1 cm to 2 cm from the side wall portion 23, and the pallets 5 on which the FIBCs 32a to 32j and 34a to 34h are placed are each arranged either in contact with the side wall portion 24 or with a gap of about 1 cm to 2 cm from the side wall portion 24. The pallets 5 are arranged such that the gaps between the first row 31 and the second row 32 and between the third row 33 and the fourth row 34 are each approximately 10 cm to 20 cm. This allows each FIBC 3 to be arranged within the interior space V such that it may come into contact with another adjacent FIBC 3 and the interior wall of the container 2 while the contact portion is less likely to be subjected to strong friction. By arranging the FIBCs 3 in this way, it is possible to avoid the rupture of the FIBCs 3 during transportation of the loaded container 1.

On the other hand, as described above, when the FIBCs 3 are arranged so as to avoid friction between the FIBC 3 and the interior wall of the container 2 or another FIBC 3 as much as possible, the FIBC 3 is more easily moved during transportation of the loaded container 1. It is also easier for the FIBC 3 to move when gaps are left between the trailing FIBCs 31j, 32j, 33h, and 34h and the second wall portion 22. The movement of the FIBC 3 here includes not only a case where the FIBC 3 moves from its initial position with the pallet 5, but also a case where the FIBC 3 is misaligned with the pallet 5 (at least part of the bottom portion 300 protrudes from the top surface of the pallet 5). The loaded container 1 includes a cushioning material 4 to restrict such movement of the FIBC 3.

### <4. Cushioning Material>

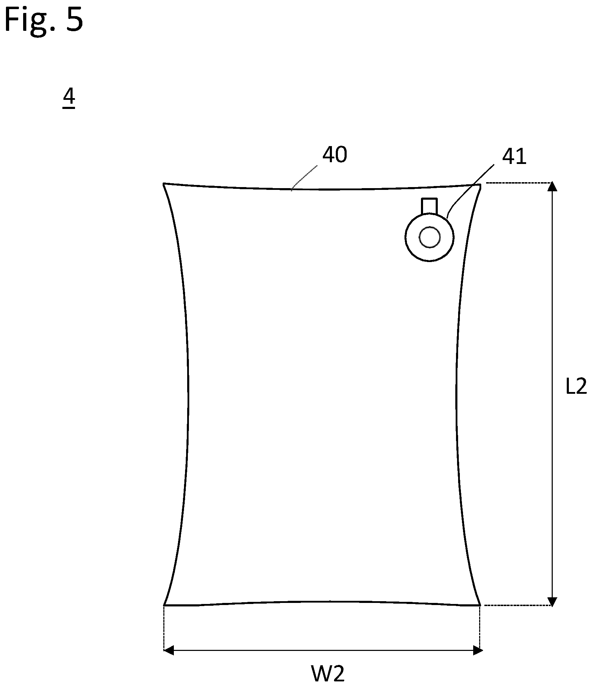

Fig. 5 is a plan view illustrating an exemplary configuration of the cushioning material 4. The cushioning material 4 is not particularly limited, and any cushioning material can be used. The cushioning material 4 of this embodiment is a bag-shaped gas bag used during container transportation, and includes a main body 40 having a ventilation hole (not illustrated) and a valve device 41 for opening and closing the ventilation hole. The main body 40 is formed into a bag shape out of a sheet material having a gas barrier property, such as synthetic resin, paper, metal, or a composite material thereof, and has a substantially rectangular external shape. The surface of the main body 40 illustrated in Fig. 5 is a surface that is used to face the FIBC 3, and has the largest area in the main body 40. The valve device 41 is configured to open the ventilation hole to fill the main body 40 with gas, open the ventilation hole to vent gas in the main body 40 to the outside, or close the ventilation hole to maintain the internal pressure in the main body 40. Filling of gas into the main body 40 is performed using a dedicated gas filling device or the like.

The gas to be filled is air in this embodiment, but is not particularly limited. The internal pressure of the cushioning material 4 can be adjusted as appropriate according to the size of a space in which the cushioning material 4 is disposed (the width of a gap to be filled with the cushioning material 4), the weight of the FIBC 3 whose movement is to be restricted, and the like. More specifically, the internal pressure of the cushioning material 4 may be, for example, 0.001 kgf/cm² to 0.50 kgf/cm², 0.01 kgf/cm² to 0.30 kgf/cm², or 0.05 kgf/cm² to 0.20 kgf/cm². When the internal pressure of the cushioning material 4 is within the above range, the movement of the FIBC 3 can be further restricted while further limiting the amount of the cushioning material 4 used. The internal pressure of the cushioning material 4 is a gauge pressure based on the pressure around the cushioning material 4 (atmospheric pressure), meaning the force for actually pushing a cargo with which the cushioning material 4 is in contact.

After careful consideration, the present inventors have found that the movement of the FIBC 3 can be efficiently restricted by placing the cushioning material 4 between the trailing FIBCs 3 of the FIBC rows arranged in parallel in the container 2 such that the cushioning material 4 is in contact with at least them. Based on this finding, in the loaded container 1, a cushioning material 4A and a cushioning material 4B are disposed between the FIBC 31j and the FIBC 32j and between the FIBC 33h and the FIBC 34h, respectively. The internal pressure of the cushioning material 4A is adjusted such that it is in contact with both the FIBC 31j and the FIBC 32j and the air in the main body 40 pushes against them. The internal pressure of the cushioning material 4B is adjusted such that it is in contact with both the FIBC 33h and the FIBC 34h and the air in the main body 40 pushes against them. As illustrated in Figs. 3 and 4, the cushioning material 4 may extend not only between the FIBCs 3, but also into gaps with the pallets 5 on which they are placed.

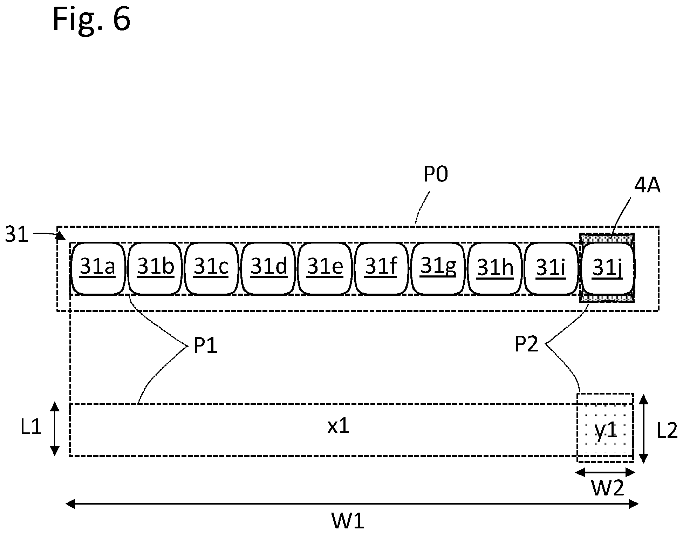

In order for the cushioning materials 4A to restrict the movement of the FIBCs 31a to 31j and 32a to 32j, the cushioning materials 4A are required to be able to come into contact with the FIBCs 31a to 31j and 32a to 32j over equal to or more than a certain area. Upon further examination, the present inventors have made the following findings. Fig. 6 is a diagram illustrating this matter. Now, let x1 denote the area of the shape obtained by projecting the main bodies 30 of all the FIBCs 31a to 31j constituting the first row 31 onto a virtual plane P0 parallel to the pair of side wall portions 23 and 24. Also, let y1 denote the area in which the cushioning material 4A overlaps the above shape on the virtual plane P0. When the loaded container 1 satisfies 5 ≤ (y1/x1) × 100, the movements of the FIBCs 31a to 31j and 32a to 32j can be restricted by placing the cushioning materials 4A. Meanwhile, when the loaded container 1 satisfies (y1/x1) × 100 ≤ 80, it can be said that the amount of the cushioning material 4 used is limited.

The value of (y1/x1) × 100 may be 5 to 70, 5 to 60, 5 to 50, 5 to 40, 5 to 30, 5 to 20, 5 to 15, 10 to 70, 10 to 60, 10 to 50, 10 to 40, 10 to 30, 10 to 20, 10 to 15, 15 to 70, 15 to 60, 15 to 50, 15 to 40, 15 to 30, 15 to 20, 20 to 70, 20 to 60, 20 to 50, 20 to 40, or 20 to 30. The same applies to the value of (y2/x2) × 100 in the following description.

When the main body 30 of the FIBC 3 expands in a state in which the content is contained (that is, when part of the side portion 301 of the FIBC 3 protrudes outward), on the virtual plane P0, the shape of the main bodies 30 of the FIBCs 31a to 31j approximates a circumscribed rectangle P1 of the whole of the main bodies 30 of the FIBCs 31a to 31j. Accordingly, the area x1 is regarded as the area of the circumscribed rectangle P1. A length L1 of the circumscribed rectangle P1 is equal to the maximum length of the main bodies 30 of the FIBCs 31a to 31j with the contents (the greatest one of the lengths in the vertical direction of the main bodies 30). A width W1 of the circumscribed rectangle P1 is equal to the maximum length from the rear side end portion of the main body 30 of the FIBC 31a to the front side end portion of the main body 30 of the FIBC 31j at a constant height relative to the bottom wall portion 20. Accordingly, the area x1 of the circumscribed rectangle P1 can be calculated in accordance with the following formula (1).$x 1 = L 1 \times W 1$ (1)

On the other hand, when the shape of the bottom portion 300 of the FIBC 3 is circular or square and the main body 30 does not expand even with the content contained (that is, in a case where the side portion 301 of the FIBC 3 containing the content has a substantially vertical line shape when the FIBC 3 is viewed from the side), the area x1 is calculated as (the area of the shape obtained by projecting the main body 30 of any one of the FIBCs 3 constituting the first row 31 onto the virtual plane P0) × (the number of the FIBCs 3 constituting the first row). The area of the projected shape of any one FIBC 3 is calculated as (the diameter or the length of one side of the bottom portion 300) × (the length in the vertical direction of the side portion 301). In other words, when the FIBC 3 meets the above-described conditions, the area x1 can also be calculated from the FIBC 3 without the content.

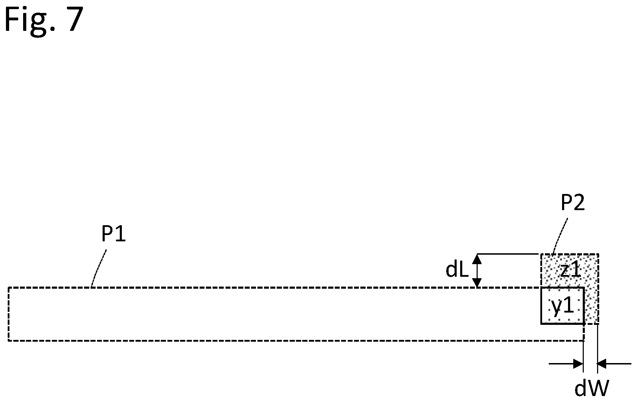

Since the shape of the cushioning material 4A on the virtual plane P0 approximates a circumscribed rectangle P2 of the main body 40 of the cushioning material 4A, the area y1 is regarded as the area of the overlapping portion of the circumscribed rectangle P2 and the circumscribed rectangle P1. A length L2 of the circumscribed rectangle P2 is equal to the maximum length in the longitudinal direction of the main body 40, and a width W2 is equal to the maximum length in the width direction of the main body 40 (see Fig. 5). The area y1 is calculated by subtracting, from (L2 × W2), which represents the area of the circumscribed rectangle P2, an area z1 of a portion where the circumscribed rectangle P2 protrudes outside the circumscribed rectangle P1. Specifically, as illustrated in Fig. 7, when dL denotes the length in the vertical direction by which the circumscribed rectangle P2 protrudes from the circumscribed rectangle P1 and dW denotes the length in the width direction by which the circumscribed rectangle P2 protrudes from the circumscribed rectangle P1, the area y1 can be calculated in accordance with the following formula (2).$y 1 = \left(L2 - dL\right) \times \left(W2 - dW\right)$ (2)

The length dL can be specified based on, for example, the measured distance from the bottom wall portion 20 to the lower end or the upper end of the cushioning material 4A, the height of the pallet 5, and the length L1. The length dW can be specified based on the measured distance from the front side end portion of the main body 30 of the FIBC 31j to the front side end portion of the cushioning material 4A.

The foregoing description is given by way of example of a case where one cushioning material 4A is disposed between the first row 31 and the second row 32. However, in addition to the cushioning material 4A, one or more cushioning materials 4 may be further disposed between the first row 31 and the second row 32. In this case, the area y1 is equal to the sum of the areas where the respective cushioning materials 4 (including the cushioning material 4A) disposed between the first row 31 and the second row 32 overlap the circumscribed rectangle P1. The position in the depth direction at which the one or more cushioning materials 4 other than the cushioning material 4A are disposed is not particularly limited. In the foregoing, the relationship between the FIBCs 31a to 31j constituting the first row 31 and the cushioning materials 4 has been described by way of example. The same applies to the relationship between the FIBCs 32a to 32j constituting the second row 32 and the cushioning materials 4. Therefore, in the loaded container 1, it suffices that at least one of the first row 31 and the second row 32 satisfies 5 ≤ (y1/x1) × 100 ≤ 80, but it is preferable that both the first row 31 and the second row 32 satisfy 5 ≤ (y1/x1) × 100 ≤ 80.

In addition, in the loaded container 1, it is preferable that either the third row 33 or the fourth row 34 (preferably, both the third row 33 and the fourth row 34) satisfy 5 ≤ (y2/x2) × 100 ≤ 80 in the relationship with the cushioning material 4B. x2 is the area of the shape obtained by projecting the main bodies 30 of the FIBCs 33a to 33h or the FIBCs 34a to 34h onto the virtual plane P0. The area x2 can be calculated in the same manner as the area x1. y2 is the area on the virtual plane P0 where the cushioning material 4B overlaps the above-described shape. The area y2 can be calculated in the same manner as the area y1. In addition to the cushioning material 4B, the loaded container 1 may further include the one or more cushioning materials 4 disposed between the third row 33 and the fourth row 34. In this case, the area y2 is the sum of the areas where the respective cushioning materials 4 (including the cushioning material 4B) disposed between the third row 33 and the fourth row 34 overlap the above-described shape. The position in the depth direction where the one or more cushioning materials 4 other than the cushioning material 4B are disposed is not particularly limited.

### <5. Manufacturing Method for Loaded Container>

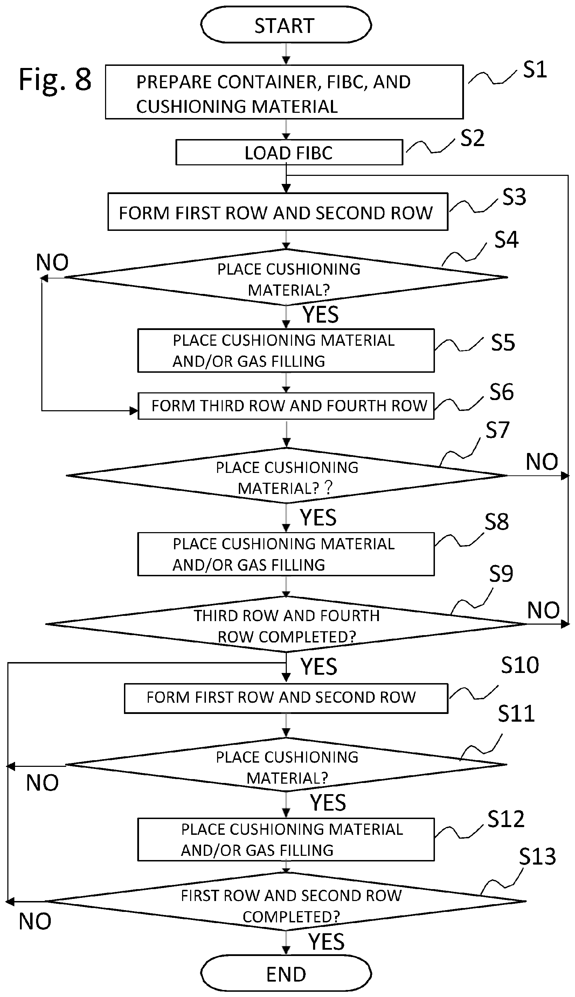

Fig. 8 is a flowchart illustrating a flow of the manufacturing method for the loaded container 1 according to this embodiment. This manufacturing method is performed in a case where the plurality of FIBCs 3 containing the contents are transported and the like. The manufactured loaded container 1 is loaded onto a vehicle, a ship, or an aircraft and transported to its destination. Each of the following Steps S1 to S13 can be performed by a person or by a machine, such as a robot.

First, the container 2, the plurality of FIBCs 3 with the contents, and the plurality of cushioning materials 4 are each prepared (Step S1). In Step S1, the container 2 is in an empty state. Each FIBC 3 is in a state in which the main body 30 contains the content. Further, each cushioning material 4 is in a state without being filled with gas. The number of the cushioning materials 4 and the positions at which these are placed are predetermined depending on the number of the FIBCs 3 and the arrangement method such that 5 ≤ (y/x) × 100 ≤ 80 is satisfied. The container 2 may be in a loaded state on a transport vehicle. The orientation of the loaded container 1 during transportation is not particularly limited, and the loaded container 1 may be loaded onto a transport vehicle or the like such that either the first wall portion 21 or the second wall portion 22 faces the direction of travel during transportation.

Next, through the loading exit, the FIBCs 3 are successively loaded into the interior space V of the container 2 (Step S2). The FIBC 3 may be loaded together with the pallet 5. Step S2 may be performed continuously in parallel with the following Steps S3 to S13, or it may be performed while pausing as appropriate.

Next, among the FIBCs 3 loaded in Step S2, the two consecutive FIBCs 3 are placed on the bottom wall portion 20 so as to form the first row 31 and the second row 32 (Step S3). For example, the first two FIBCs 3 loaded in Step S2 are each placed on the bottom wall portion 20 so as to face the first wall portion 21. In this case, the above-described two FIBCs 3 each serve as the leading FIBC 31a of the first row 31 and the leading FIBC 32a of the second row 32. On the other hand, when Step S3 is performed again after Step S6 described below is performed, the two consecutive FIBCs 3 are placed in front of the FIBCs 3 placed in the previous Step S3 so as to be adjacent to them. In other words, Step S3 is a step of sequentially arranging, from the rear side toward the front side, the FIBCs 3 that constitute the first row 31 and the second row 32.

Next, based on the predetermined arrangement, a determination is made as to whether the cushioning material 4 is to be placed between the two FIBCs 3 that were placed in the immediately preceding Step S3 (Step S4). In a case where it is determined in Step S4 that the cushioning material 4 should be placed (YES), Step S5 is then performed. When in Step S4, it is determined that the cushioning material 4 should not be placed (NO), Step S5 is skipped, and Step S6 is performed next.

In Step S5, after the cushioning material 4 is sandwiched between the two FIBCs 3 arranged in the immediately preceding Step S3, the main body 40 is filled with gas using a dedicated gas filling device. As described above, the amount of gas to be filled is appropriately adjusted in accordance with the size of the gap between the FIBCs 3 and/or the weight of the FIBCs 3 such that the cushioning material 4 can apply an appropriate pressing force to the FIBCs 3. After the completion of Step S5, Step S6 is performed.

In Step S6, the respective two consecutive FIBCs 3 loaded in Step S2 are placed on the two FIBCs 3 arranged in the immediately preceding Step S3 while being aligned with them. For example, when the FIBCs 31a and 32a were arranged in the immediately preceding Step S3, respective two new FIBCs 3 are placed on the FIBCs 31a and 32a. In other words, the respective two new FIBCs 3 described above become the leading FIBC 33a of the third row 33 and the leading FIBC 34a of the fourth row 34. That is, Step S6 is a step of forming the third row 33 on the first row 31 and the fourth row 34 on the second row 32.

Next, based on the predetermined arrangement, a determination is made as to whether the cushioning material 4 is to be placed between the two FIBCs 3 that were placed in the immediately preceding Step S6 (Step S7). When in Step S6, it is determined that the cushioning material 4 should be placed (YES), Step S8 is performed next. When it is determined in Step S7 that the cushioning material 4 should not be placed (NO), Step S3 is performed again.

In Step S8, in the same manner as in Step S5, after the cushioning material 4 is sandwiched between the two FIBCs 3 arranged in the immediately preceding Step S6, the main body 40 is filled with gas using a dedicated gas filling device. After the completion of Step S8, Step S9 is performed.

In Step S9, it is determined whether the third row 33 and the fourth row 34 are completed. In other words, it determines whether the respective FIBCs 3 arranged in the immediately preceding Step S6 correspond to the trailing FIBCs 3 (FIBCs 33h and 34h) of the third row 33 and the fourth row 34. When it is determined that the third row 33 and the fourth row 34 are not completed (NO), the process returns to Step S3 again and continues through Step S9. When it is determined that the third row 33 and the fourth row 34 are completed (YES), Step S10 is performed.

In Step S10, an arrangement of the first row 31 and the second row 32 is performed in a portion disposed on the front side with respect to the third row 33 and the fourth row 34. Specifically, the two FIBCs 3 loaded consecutively are placed on the front side of the FIBCs 3 placed in the immediately preceding Step S3 or the immediately preceding Step S10 so as to be adjacent thereto.

In Step S11, based on the predetermined arrangement, it is determined whether the cushioning material 4 is to be placed between the two FIBCs 3 that were placed in the immediately preceding Step S10. When in Step S11, it is determined that the cushioning material 4 should be placed (YES), Step S12 is performed next. When it is determined in Step S11 that the cushioning material 4 should not be placed (NO), Step S10 is performed again.

In Step S12, in the same manner as in Step S5, after the cushioning material 4 is sandwiched between the two FIBCs 3 arranged in the immediately preceding Step S10, the main body 40 is filled with gas using a dedicated gas filling device. After the completion of Step S12, Step S13 is performed.

In Step S13, it is determined whether the first row 31 and the second row 32 are completed. In other words, it is determined whether the respective FIBCs 3 arranged in the immediately preceding Step S10 correspond to the trailing FIBCs 3 (FIBCs 31j and 32j) of the first row 31 and the second row 32. When it is determined that the first row 31 and the second row 32 are not completed (NO), the process returns to Step S10 again and continues through Step S13. When it is determined that the first row 31 and the second row 32 are completed (YES), the loading exit of the container 2 is closed by the first door 22a and the second door 22b, whereby the loaded container 1 is manufactured. When the determination is YES in Step S13, it is determined in the immediately preceding Step S11 that the cushioning material 4 should be placed, and the placement of the cushioning material 4 and gas filling are performed in the subsequent Step S12. In other words, in Step S12, the cushioning material 4 is disposed between the first row 31 and the second row 32 so as to be in contact with at least the FIBC 31j and the FIBC 32j.

### <6. Features>

According to the loaded container 1 according to the above-described embodiment, even when a gap remains between the FIBC rows arranged in the container 2, the movement of the FIBC 3 can be restricted while the amount of the cushioning material 4 used is limited. In particular, when the plurality of FIBCs 3 are loaded into the container 2, it is necessary to position each FIBC 3 such that it is not subjected to strong friction from another FIBC 3 or the interior wall of the container 2 in order to avoid the rupture of the FIBCs 3. Accordingly, although the FIBC 3 is considered to move readily during transportation, the loaded container 1 can achieve the effect of restricting the movement of the FIBC 3 while avoiding the rupture of the FIBC 3. In particular, as in this embodiment, when the trailing FIBC 33h of the third row 33 is disposed on the rear side with respect to the trailing FIBC 31j of the first row 31 and the trailing FIBC 34h of the fourth row 34 is disposed on the rear side with respect to the trailing FIBC 32j of the second row 32, a wide gap (that is, an environment in which the FIBCs 33a to 33h and the FIBCs 34a to 33h can readily move) is created between the trailing FIBC 33h of the third row 33 and the trailing FIBC 34h of the fourth row 34, and the second wall portion 22. However, by disposing the cushioning material 4B as described above, the effect of restricting the movement of the FIBCs 33a to 33h and 34a to 34h can be achieved.

### <7. Modification>

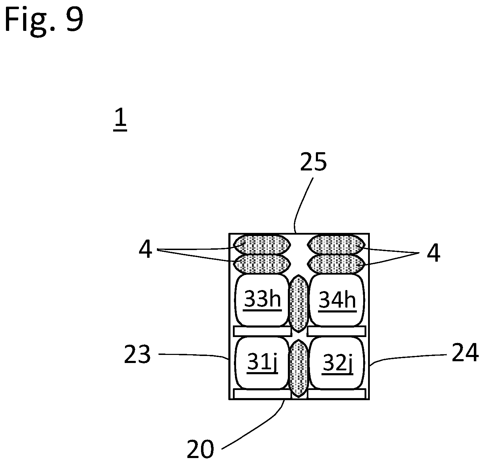

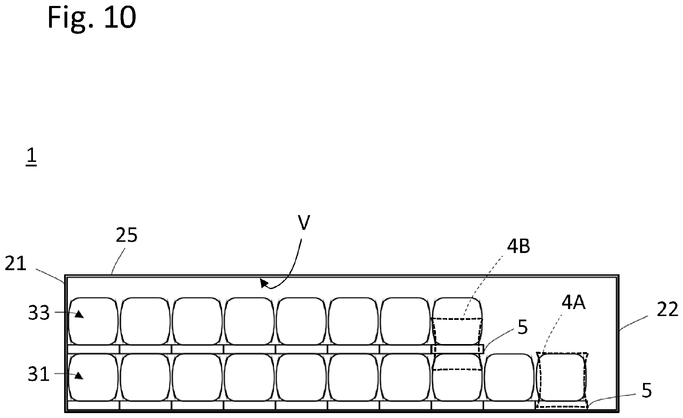

While the embodiment of the present disclosure has been described above, the present disclosure is not limited to the above embodiment, and various modifications are possible without departing from the intent of the disclosure. For example, the following modifications are possible. Further, the features of the following modifications can be used in combination as appropriate.
(1) The number of the plurality of FIBCs 3 is not limited to the number in the above embodiment, and can be changed as needed. For example, in the loaded container 1, the third row 33, and the fourth row 34 may be omitted. In other words, the plurality of FIBCs 3 need not be stacked in the vertical direction. Accordingly, the cushioning material 4B may also be omitted, and the loaded container 1 may be provided with the one cushioning material 4A. On the other hand, in the loaded container 1, the plurality of FIBCs 3 may be stacked in three or more tiers in the vertical direction. Further, the plurality of FIBCs 3 may be arranged in three or more rows on the bottom wall portion 20. The first row 31 and the second row 32 may be defined in a manner opposite to that of the above embodiment. Similarly, the third row 33 and the fourth row 34 may be defined in a manner opposite to that of the above embodiment.
(2) The top portion 25 of the container 2 may be omitted. The plurality of FIBCs 3 may also be loaded in the container 2 without using the pallet 5.
(3) When the container 2 includes the top portion 25, the loaded container 1 may further include the one or more cushioning materials 4 disposed between the top portion 25 and the FIBCs 3 of the third row and the fourth row as illustrated in Fig. 9. In this case, it is preferable that the one or more cushioning materials 4 be disposed between the top portion 25 and the trailing FIBCs 3 (FIBCs 33h and 34h) of the third row and the fourth row.
(4) The cushioning material 4 including the cushioning material 4B may be disposed to extend not only between the third row 33 and the fourth row 34, but also between the first row 31 and the second row 32, as illustrated in Fig. 10. In other words, the loaded container 1 may be provided with the one or more cushioning materials 4 disposed between the first row 31 and the second row 32 and between the third row 33 and the fourth row 34 so as to be in contact with at least four FIBCs 3 constituting the respective rows of the first row 31 to the fourth row 34. The cushioning material 4 may be in contact with two or more FIBCs 3 that belong to the same FIBC row and are consecutive in the depth direction.
(5) The cushioning material 4 is not limited to a gas bag, and ones known as packaging materials can be used as appropriate. The cushioning material 4 may be, for example, one having a bag-shaped main body filled with bead-like foamed cushioning material.

### EXAMPLES

The following provides a description of examples of the present disclosure in detail. However, the present disclosure is not limited to these examples.

A container 2X, 32 FIBCs 3X, and three cushioning materials 4X were prepared. The container 2X was a known shipping container (25.6 tons), and had a configuration similar to a configuration of the container 2 according to the above embodiment. Each FIBC 3X contained water-absorbent resin particles. The shape of the bottom portion of each FIBC 3X was square, and the length of one side was 0.9 m. The length in the vertical direction of the side portion of each FIBC 3X was 1.3 m. Each cushioning material 4X was an air bag, and each was used at an internal pressure in the range of 0.06 kgf/cm² to 0.10 kgf/cm². At this time, the circumscribed rectangle of the main body of the cushioning material 4X had a height of 1.1 m and a width of 0.8 m.

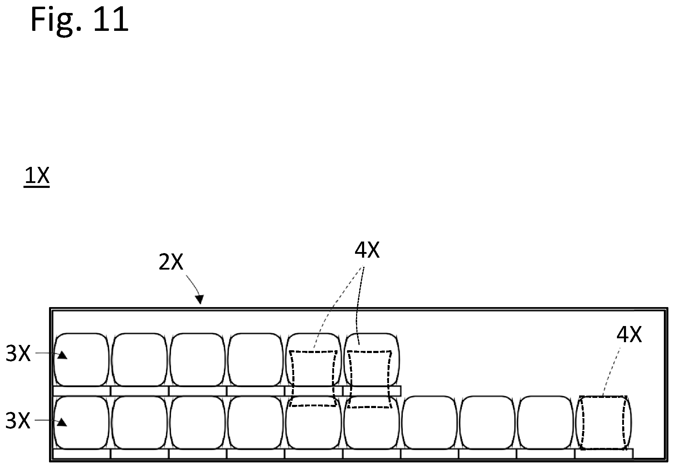

Using the container 2X, the FIBC 3X, and the cushioning material 4X, a loaded container 1X according to the example was manufactured in accordance with the manufacturing method according to the above embodiment. Specifically, as illustrated in Fig. 11, 20 FIBCs 3X were arranged in parallel to form the first row and the second row (ten in each row), and 12 FIBCs 3X were arranged in parallel to form the third row and the fourth row (six in each row). Each FIBC 3X was placed on a pallet. The height of each pallet was 0.12 m. Additionally, each FIBC 3X did not substantially expand even when loaded with the content. In Fig. 11, the first wall portion side of the container 2X is illustrated on the left, and the second wall portion side of the container 2X is illustrated on the right.

One cushioning material 4X was disposed between the trailing FIBCs 3X of the first row and the second row. This cushioning material 4X was disposed such that its upper end coincided with the upper ends of the main bodies of the trailing FIBCs 3X of the first row and the second row. Another cushioning material 4X was disposed between the trailing FIBCs 3X of the third row and the fourth row and between the FIBCs 3X (of the first row and the second row) below the FIBCs 3X. The remaining cushioning material 4X was disposed between the FIBCs 3X that are one position behind the trailing FIBCs 3X of the third row and the fourth row and between the FIBCs 3X (of the first row and the second row) below the FIBCs 3X. The two cushioning materials 4X disposed between the third row and the fourth row were arranged such that the height from the bottom wall portion 20 to their respective upper ends was 2.1 meters (that is, the height from the bottom wall portion 20 to their respective lower ends was 1 meter).

In the loaded container 1X, the area x1 was calculated to be 0.9 × 1.3 × 10 = 11.7 (m²) based on the length of one side of the bottom portion of the FIBC 3X, the length in the vertical direction of the side portion, and the number of the FIBCs 3X constituting the first row and the second row. The area y1 was calculated to be 0.8 × 1.1 + 2 × 0.8 × (1.3 + 0.12 - 1) = 1.552 (m²) based on the area of the circumscribed rectangle of the one cushioning material 4X, the positions in the vertical direction of the two cushioning materials 4X, and the height of the pallet. This resulted in (y1/x1) × 100 ≈ 13.26, confirming that the range of 5 ≤ (y1/x1) × 100 ≤ 80 is satisfied.

Similarly, the area x2 was calculated to be 0.9 × 1.3 × 6 = 7.02 (m²). The area y2 was calculated to be 2 × 0.8 × (2.1 - 0.12 - 1.3 - 0.12) = 0.896 (m²). This resulted in (y2/x2) × 100 ≈ 12.76, confirming that the range of 5 ≤ (y2/x2) × 100 ≤ 80 is also satisfied in the relationship between the third row and the fourth row, and the cushioning material.

The above-described loaded container 1X was transported from Japan to an overseas destination. The transportation route was defined as a route through land transportation, sea transportation, and land transportation in this order. For land transportation, the loaded container 1X was arranged such that the first wall portion side of the loaded container 1X faced the direction of travel. After arrival at the destination, the unloading entrance of the loaded container 1X was opened, and the presence or absence of movement of each FIBC 3X was checked by comparison with a photograph of the interior of the loaded container 1X taken at the time of manufacturing. As a result, no confirmation of movement of the FIBC 3X was obtained. The presence or absence of rupture of the FIBC 3X was also checked, but no rupture was confirmed. Accordingly, this confirms that according to the present disclosure, it is possible to restrict the movement of the FIBCs while limiting the amount of the cushioning material used.

### REFERENCE SIGNS LIST

1, 1X Loaded container
2, 2X Container
3, 31a to 31j, 32a to 32j, 33a to 33h, 34a to 34h, 3X FIBC
4, 4A, 4B, 4X Cushioning material
31 First row
32 Second row
33 Third row
34 Fourth row

## Claims

1. A cargo-loaded container comprising:
a container that includes a rectangular bottom wall portion, a first wall portion, a second wall portion, and a pair of side wall portions, the rectangular bottom wall portion having mutually facing first and second sides and mutually facing third and fourth sides, the first wall portion rising from the first side, the second wall portion rising from the second side, the pair of side wall portions rising from the third side and the fourth side;
a plurality of flexible containers arranged in the container, each of the plurality of flexible containers including a main body and a content contained in the main body, the main body including a bottom portion and a side portion continuous with the bottom portion, the plurality of flexible containers forming at least a first row and a second row arranged in parallel in which the flexible container closest to the first wall portion is a leading flexible container and the flexible container closest to the second wall portion is a trailing flexible container; and
one or more cushioning materials disposed between the first row and the second row, wherein
the one or more cushioning materials are disposed so as to be in contact with at least a trailing flexible container of the first row and a trailing flexible container of the second row, and
when an area of a shape obtained by projecting the main bodies of all the flexible containers constituting the first row onto a virtual plane parallel to the pair of side wall portions is x1, and a total area in which the one or more cushioning materials overlap the shape on the virtual plane is y1, $5 \leq \left(y1/x1\right) \times 100 \leq 80$ is satisfied.

2. The cargo-loaded container according to claim 1, wherein
the plurality of flexible containers further form a third row and a fourth row arranged in parallel in which the flexible container closest to the first wall portion is a leading flexible container and the flexible container closest to the second wall portion is a trailing flexible container,
the third row is formed on the first row, and the fourth row is formed on the second row,
the cargo-loaded container further comprises one or more cushioning materials disposed between the third row and the fourth row,
the one or more cushioning materials disposed between the third row and the fourth row are disposed so as to be in contact with at least a trailing flexible container of the third row and a trailing flexible container of the fourth row, and
when an area of a shape obtained by projecting the main bodies of all the flexible containers constituting the third row onto the virtual plane is x2, and a total area in which the one or more cushioning materials disposed between the third row and the fourth row overlap the shape on the virtual plane is y2, $5 \leq \left(y2/x2\right) \times 100 \leq 80$ is satisfied.

3. The cargo-loaded container according to claim 2, wherein
the trailing flexible container of the third row is disposed closer to the first wall portion than the trailing flexible container of the first row, and the trailing flexible container of the fourth row is disposed closer to the first wall portion than the trailing flexible container of the second row.

4. The cargo-loaded container according to claim 2, wherein
the one or more cushioning materials disposed between the third row and the fourth row include one or more cushioning materials disposed between the first row and the second row and between the third row and the fourth row so as to be in contact with at least four flexible containers constituting each of the first row to the fourth row.

5. The cargo-loaded container according to claim 3, wherein
the one or more cushioning materials disposed between the third row and the fourth row include one or more cushioning materials disposed between the first row and the second row and between the third row and the fourth row so as to be in contact with at least four flexible containers constituting each of the first row to the fourth row.

6. The cargo-loaded container according to claim 2, wherein
the container further includes a top portion opposite the bottom wall portion, and
the cargo-loaded container further comprises one or more cushioning materials disposed between the top portion and the trailing flexible containers of the third row and the fourth row.

7. The cargo-loaded container according to claim 3, wherein
the container further includes a top portion opposite the bottom wall portion, and
the cargo-loaded container further comprises one or more cushioning materials disposed between the top portion and the trailing flexible containers of the third row and the fourth row.

8. A manufacturing method for a cargo-loaded container, comprising:
preparing a container that includes a rectangular bottom wall portion, a first wall portion, a second wall portion, and a pair of side wall portions, the rectangular bottom wall portion having mutually facing first and second sides and mutually facing third and fourth sides, the first wall portion rising from the first side, the second wall portion rising from the second side, the pair of side wall portions rising from the third side and the fourth side;
preparing a plurality of flexible containers each including a main body and a content contained in the main body, the main body including a bottom portion and a side portion continuous with the bottom portion;
preparing one or more cushioning materials;
arranging the plurality of flexible containers on the bottom wall portion and forming at least a first row and a second row arranged in parallel in which the flexible container closest to the first wall portion is a leading flexible container and the flexible container closest to the second wall portion is a trailing flexible container; and
disposing the one or more cushioning materials between the first row and the second row, wherein
the disposing of the one or more cushioning materials includes:
disposing the one or more cushioning materials so as to be in contact with at least a trailing flexible container of the first row and a trailing flexible container of the second row; and
disposing the one or more cushioning materials such that when an area of a shape obtained by projecting the main bodies of all the flexible containers constituting the first row onto a virtual plane parallel to the pair of side wall portions is x1, and a total area in which the one or more cushioning materials overlap the shape on the virtual plane is y1, $5 \leq \left(y1/x1\right) \times 100 \leq 80$ is satisfied.
